# EUROPÄISCHE PATENTSCHRIFT

(11) **EP 0 596 178 B1**
(45) Veröffentlichungstag und Bekanntmachung des Hinweises auf die Patenterteilung: **01.02.1995**
(21) Anmeldenummer: 92810859.6
(22) Anmeldetag: 06.11.1992
(51) Int. Cl.: G01F 1/84

(54) **Coriolis-Massendurchflussmesser**
Coriolis mass flow meter
Débimètre massique selon le principe de Coriolis

(43) Veröffentlichungstag der Anmeldung: 11.05.1994
(73) Patentinhaber: Endress + Hauser Flowtec AG, CH-4153 Reinach BL 1 (CH)
(72) Erfinder: Wenger, Alfred, Dr. rer. nat., CH-8413 Neftenbach ZH (CH); Bitto, Ennio, CH-4147 Aesch BL (CH)
(74) Vertreter: Morstadt, Volker, Dipl.-Ing.

(56) Entgegenhaltungen:
- EP-A- 0 083 144
- EP-A- 0 261 436
- DE-A- 3 816 045
- GB-A- 2 167 858
- PATENT ABSTRACTS OF JAPAN vol. 13, no. 35 (P-818)(3383) 26. Januar 1989 & JP-A-63 233 328
- AUTOMATISIERUNGSTECHNISCHE PRAXIS - ATP Bd. 30, Nr. 5, 1988, MUNCHEN DE Seiten 224 - 230 E. AMBERGER, E.A. 'UNMITTELBARE MESSUNG DES MASSEDURCHFLUSSES MIT HILFE DER CORIOLIS-KRAFT'

## Beschreibung

Die Erfindung betrifft einen Massendurchflußmesser nach dem Coriolis-Prinzip mit zwei geraden, parallelen Meßrohren als von einem zu messenden Fluid durchströmten Schwingkörpern.

In der eigenen US-A 47 93 191 ist ein Massendurchflußmesser nach dem Coriolis-Prinzip beschrieben,
- der in den Verlauf einer von einem zu messenden Fluid durchströmten Rohrleitung eines gegebenen Durchmessers axial mit ihr fluchtend einsetzbar ist,
- mit einem Einlaßrohr und einem Auslaßrohr,
   -- die der Verbindung mit der Rohrleitung dienen,
- mit einem Einlaßverteilerstück und einem Auslaßverteilerstück,
- mit einem äußeren Trägerrohr,
   -- dessen jeweiliges Ende am Einlaßrohr bzw. am Auslaßrohr fixiert ist,
- mit jeweils einer ringförmigen Membran,
   -- über die das Einlaßrohr mit dem Einlaßverteilerstück bzw. das Auslaßrohr mit dem Auslaßverteilerstück verbunden ist,
- mit zwei parallelen, geraden, an jeweils beiden Enden im Einlaßverteilerstück bzw. im Auslaßverteilerstück fixierten Meßrohren gleicher lichter Weite und gleicher Wandstärke,
- mit einen Schwingungserreger,
   -- der die Meßrohre zu Resonanzschwingungen anregt,
- mit zwei entlang der Meßrohre versetzt angeordneten Sensoren für deren Schwingungen,
- mit einer Treiberelektronik für den Schwingungserreger und
- mit einer Auswerteelektronik,
   -- die aus der Phasendifferenz der Signale der Sensoren den Massendurchfluß und/oder aus der Schwingfrequenz die Dichte des Fluids bestimmt.

Aus unterschiedlichen Gründen, z.B. wegen der Empfindlichkeit des Massendurchflußmessers gegenüber aus der Rohrleitung stammenden Vibrationen oder wegen der Abhängigheit des Meßergebnisses vom Druck des Fluids, können bei diesem vorbeschriebenen Massendurchflußmesser die Membranen nicht beliebig weich ausgebildet werden, sondern müssen eine gegebene Mindeststeifheit haben.

Da Temperaturänderungen des Fluids inhomogene Temperaturverteilungen im Massendurchflußmesser zur Folge haben, führen diese zu temperatur-bedingten mechanischen Spannungen in den schwingenden Meßrohren und in den Membranen. Erreichen diese Spannungen Werte oberhalb der Dehngrenze der Membranen, so entstehen irreversible plastische Verformungen, die die Kenngrößen des Schwingsystems ebenfalls irreversibel ändern, so daß eine neue Kalibrierung des Massendurchflußmessers erforderlich wird.

Bei der in der US-A 46 53 332 beschriebenen Anordnung hat man das eben geschilderte Problem durch Kompensationsrohre schon zu lösen versucht. Diese Anordnung ist ein Massendurchflußmesser nach dem Coriolis-Prinzip,
- der in den Verlauf einer von einem zu messenden Fluid durchströmten Rohrleitung eines gegebenen Durchmessers einsetzbar ist,
- mit einem Einlaßrohr und einem Auslaßrohr,
   -- die zu einer zentralen Anschlußeinheit zusammengefaßt sind und einer derartigen Verbindung mit der Rohrleitung dienen,
      --- daß die Achse des Massendurchflußmessers und die der Rohrleitung nicht zusammenfallen,
- mit einem ersten geraden, mit dem Einlaßrohr verbundenen Kompensationsrohr und einem zweiten geraden, mit dem Auslaßrohr verbundenen Kompensationsrohr,
   -- wobei die beiden Kompensationsrohre sich in entgegensetzte Richtungen bei fluchtenden Achsen erstrecken,
- mit zwei zueinander und zum Kompensationsrohr derart parallelen, geraden Meßrohren,
   --- daß die Achsen dieser vier Rohre in einer Ebene liegen,
- mit je einem Verteilerstück zur Verbindung des ersten bzw. des zweiten Kompensationsrohres mit den einen Enden bzw. mit den anderen Enden der Meßrohre,
- mit einem an der zentralen Anschlußeinheit fixierten Trägerrohr,
- mit einem Schwingungserreger,
   -- der die Meßrohre zu Resonanzschwingungen anregt,
- mit zwei entlang der Meßrohre versetzt angeordneten Sensoren für deren Schwingungen,
- mit einer Treiberelektronik für den Schwingungserreger und
- mit einer Auswerteelektronik,
   -- die aus der Phasendifferenz der Signale der Sensoren den Massendurchfluß und/oder aus der Schwingfrequenz die Dichte des Fluids bestimmt.

Da die Achse dieses vorbeschriebenen Massendurchflußmessers mit der Achse der Rohrleitung nicht fluchtet, muß das Fluid seine Strömungsrichtung in der zentralen Anschlußeinheit um zweimal 90° und auch in den Verteilerstücken um jeweils 180° ändern, was zu Turbulenzen und Kavitationsproblemen führen kann. Dieser Massendurchflußmesser verschenkt daher den nicht hoch genug einzuschätzenden Vorteil des eingangs zuerst erläuterten Massendurchflußmessers, bei dem das Fluid seine Strömungsrichtung nicht ändert, da die Achse der Rohrleitung geradlinig in die des Massendurchflußmessers übergeht, diese Achsen also fluchten.

Die in den Ansprüchen definierte Erfindung dient der Erhöhung der Temperaturwechselbeständigkeit und der Temperaturschockunempfindlichkeit des eingangs zuerst erläuterten Massendurchflußmessers und damit einer Erweiterung von dessen nutzbarem Temperaturbereich.

Daher besteht die Erfindung in einem Massendurchflußmesser nach dem Coriolis-Prinzip,
- der in den Verlauf einer von einem zu messenden Fluid durchströmten Rohrleitung eines gegebenen Durchmessers axial mit ihr fluchtend einsetzbar ist,
- mit einem Einlaßrohr und einem Auslaßrohr,
   -- die der Verbindung mit der Rohrleitung dienen,
- mit einem Einlaßverteilerstück und einem Auslaßverteilerstück,
- mit einem nach Einsetzen mit der Rohrleitung koaxialen äußeren Trägerrohr,
   -- dessen jeweiliges Ende am Einlaßrohr bzw. am Auslaßrohr fixiert ist,
- mit jeweils einem Verbindungsstück,
   -- über das das Einlaßrohr mit dem Einlaßverteilerstück bzw. das Auslaßrohr mit dem Auslaßverteilerstück verbunden ist,
- mit zwei parallelen, geraden, an jeweils beiden Enden im Einlaßverteilerstück bzw. im Auslaßverteilerstück fixierten Meßrohren gleicher lichter Weite und gleicher Wandstärke,
- mit einem geraden, internen Trägerelelement,
   -- dessen Achse parallel zu der in der von den Achsen der Meßrohre gebildeten Ebene verlaufenden Symmetrieachse der Meßrohre angeordnet ist,
   -- dessen jeweiliges Ende im Einlaßverteilerstück bzw. im Auslaßverteilerstück fixiert ist und
   -- dessen thermischer Übergangswiderstand zum Fluid wesentlich kleiner ist als der thermische Übergangswiderstand des Trägerrohrs zum Fluid,
- mit einem Schwingungserreger,
   -- der die Meßrohre zu Resonanzschwingungen anregt,
- mit mindestens zwei entlang der Meßrohre versetzt angeordneten Sensoren für deren Schwingungen,
- mit einer Treiberelektronik für den Schwingungserreger und
- mit einer Auswerteelektronik,
   -- die aus der Phasendifferenz der Signale der Sensoren den Massendurchfluß und/oder aus der Schwingfrequenz die Dichte des Fluids bestimmt.

Nach einer Ausgestaltung der Erfindung hat das Trägerelement eine mindestens zweimal, vorzugsweise zehn- bis zwanzigmal, größere axiale Steifheit als die Meßrohre.

Nach einer anderen Ausgestaltung der Erfindung hat das Trägerelement eine durchgehende axiale Bohrung und eine lichte Weite, die gleich der der Meßrohre ist und die vom Fluid durchströmt ist, wobei vorzugsweise die Wandstärke des Trägerelements entlang seiner Umfangskreise nicht konstant sein kann. Zweckmäßigerweise kann dabei die Wandstärke des Trägerelements an seiner von den Meßrohren abgewandten Seite wesentlich größer als an seiner den Meßrohren zugewandten Seite sein.

Nach einer Weiterbildung dieser Ausgestaltungen der Erfindung hat die Achse der Bohrung des Trägerelements von den Achsen der beiden Meßrohre den gleichen Abstand; bevorzugt ist der Abstand der Achsen der beiden Meßrohre voneinander gleich deren jeweiligem Abstand von der Achse der Bohrung des Trägerelements.

Nach einer weiteren Ausgestaltungen der Erfindung ist das Trägerelement als Heatpipe ausgebildet.

Nach einer weiteren anderen Ausgestaltung der Erfindung sind die Meßrohre vom Schwingungserreger zu gegenphasigen Biegeschwingungen in der von den Achsen der Meßrohre gebildeten Ebene erregt.

Die Erfindung wird nun anhand der Figuren der Zeichnung näher erläutert, in der schematisch der mechanische Teil eines Ausführungsbeispiel dargestellt ist.
- Fig. 1 zeigt: in geschnittener Seitenansicht den mechanischen Teil eines Massendurchflußmessers,
- Fig. 2 zeigt: eine Querschnittsansicht des Massendurchflußmessers von Fig. 1 entlang der Schnittlinie A-A, und
- Fig. 3 zeigt: eine Querschnittsansicht des Massendurchflußmessers von Fig. 1 entlang der Schnittlinie B-B.

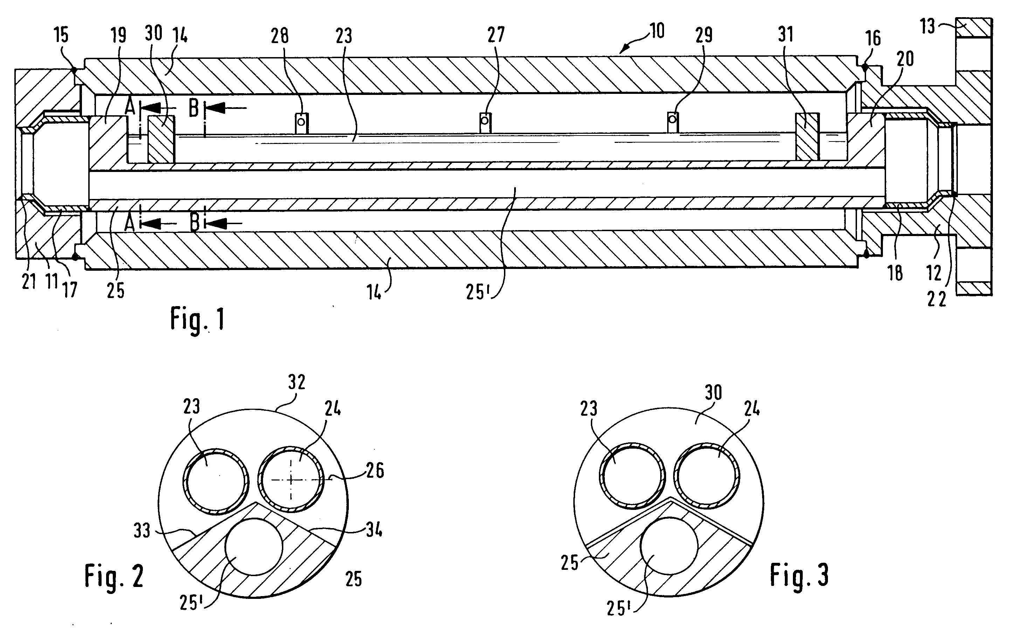

Der in Fig. 1 in geschnittener Seitenansicht gezeigte mechanische Teil eines Massendurchflußmessers 10, der in den Verlauf einer von einem zu messenden Fluid durchströmten, aus Übersichtlichkeitsgründen jedoch nicht dargestellten Rohrleitung eines gegebenen Durchmessers axial mit ihr fluchtend einsetzbar ist, hat ein Einlaßrohr 11 und ein Auslaßrohr 12, die der Verbindung mit dieser Rohrleitung dienen. Diese Verbindungsmöglichkeit ist z.B. mittels Flanschen 13, wie in Fig. 1 rechts dargestellt, oder in anderer Weise möglich, wie in Fig. 1 links durch keine weitere Modifizierung angedeutet ist.

Der jeweils äußere Teil von Einlaßrohr 11 und Auslaßrohr 12 ist am jeweiligen Ende eines massiven äußeren Trägerrohrs 14 fixiert, wie durch die jeweiligen Löt-, Hartlöt- oder Schweißnähte 15, 16 veranschaulicht ist.

Der jeweils innere Teil von Einlaßrohr 11 und Auslaßrohr 12 ist mittels jeweils eines Verbindungsstücks 17, 18 an einem Einlaßverteilerstück 19 bzw. an einem Auslaßverteilerstück 20 fixiert, z.B. wiederum mittels Löt-, Hartlöt- oder Schweißnähten 21, 22.

An der vom Einlaßrohr 11 bzw. vom Auslaßrohr 12 abgewandten Seite des Einlaßverteilerstücks 19 bzw. des Auslaßverteilerstück 20 sind darin die jeweiligen Enden von zwei parallelen, geraden Meßrohren 23, 24 mit gleicher lichter Weite und gleicher Wandstärke fixiert (das Meßrohr 24 ist nur in den Fig. 2 und 3 zu sehen).

Ferner ist ein gerades internes Trägerelement 25 vorgesehen, dessen Achse parallel zu der in der von den Achsen der Meßrohre gebildeten Ebene 26 verlaufenden Symmetrieachse der Meßrohre angeordnet ist (vgl. Fig. 2). Das jeweilige Ende des Trägerelements 25 ist im Einlaßverteilerstück 19 bzw. im Auslaßverteilerstück 20 fixiert. Der thermische Übergangswiderstand des Trägerelements 25 zum Fluid ist wesentlich kleiner als der thermische Übergangswiderstand des Trägerrohrs 14 zum Fluid.

Im Ausführungsbeispiel nach Fig.1 ist die axiale Steifheit des Trägerelements 25 mindestens zweimal, vorzugsweise zehn- bis zwanzigmal, größer als die axiale Steifheit der Meßrohre 23, 24.

Da die Achse des Trägerelements 25 lediglich parallel zu derjenigen Symmetrieachse der beiden Meßrohre 23, 24 verläuft, die in der von ihrer jeweiligen Achse gebildeten Ebene 26 liegt, liegt die Achse des Trägerelements 25 also gerade nicht in dieser Ebene 26.

Im Ausführungsbeispiel der Fig. 1 weist das Trägerelement 25 eine axiale Bohrung 25' auf, die vom Fluid durchströmt wird. Zweckmäßigerweise hat die Achse der Bohrung 25' von jeder Achse der beiden Meßrohre 23, 24 den gleichen Abstand. Bevorzugt ist auch der Abstand der Achsen der beiden Meßrohre 23, 24 voneinander gleich deren jeweiligem Abstand von der Achse der Bohrung 25', so daß sich hinsichtlich der Lumina der drei Rohre eine punktsymmetrische Anordnung ergibt und in jeder Ebene senkrecht zu den Rohrachsen die Mittelpunkte dieser Lumina die Ecken eines gleichseitigen Dreiecks bilden.

Als einfachste Ausbildung der vielen möglichen Ausbildungen des Trägerelements 25 kann auch ein mit den beiden Meßrohren 23, 24 identisches drittes Rohr dienen, das allerdings gerade nicht schwingt, s.u.

Bei den eben erläuterten Ausführungsvarianten der Erfindung hat das fluid-durchflossene Trägerelement 25 lediglich formale Ähnlichkeit mit den beiden oben erwähnten Kompensationsrohren nach der US-A 46 53 332, da die Rohrleitung, in die dieser Massendurchflußmesser eingesetzt ist, gerade nicht mit dessen Hauptachse axial fluchtet. Die eingangs geschilderten Probleme hinsichtlich der plastischen Verformung der Membranen durch mechanische Spannungen treten daher bei diesem vorbeschriebenen Massendurchflußmesser nicht auf, da die Membranen oder mit diesen vergleichbare Teile fehlen.

Die Erfindung läßt sich auch mit einem Trägerelement realisieren, das nicht vom Fluid durchflossen ist, sondern das z.B. durch Ausbildung in Form eines sogenannten Heatpipe eine um zwei bis drei Größenordnungen bessere Wärmeleitfähigkeit als die üblichen Metalle hat, oder das durch andere geignete Maßnahmen besonders gut wärmeleitend ist.

Bei einem Heatpipe handelt es sich um ein an seinen Enden verschlossenes, mit einem teils flüssigen, teils dampfförmigen Medium, z.B. Wasser, Methanol, Ethenol o.ä. unter Vakuum gefülltes Rohr, vgl. die GB-A 21 94 324. Dabei ist an und entlang der Innenwand des Rohres ein dochtartiger Körper angebracht, in dessen Kapillarsystem die flüssige Phase vom kalten zum warmen Ende des Rohres wandert. Hier verdampft die Flüssigkeit unter Aufnahme der erforderlichen Verdampfungsenergie aus dem außerhalb des Rohres angebotenen Energievorrat. Dieser Dampf strömt im Lumen des Rohres zu dessen kaltem Ende, wo er unter Abgabe der Kondensationsenergie an die Umgebung dieses Rohrendes kondensiert.

In der Mitte des Meßrohrs 23 ist eine Halterung 27 für einen Schwingungserreger befestigt, der z.B. von der Art sein kann, wie er in den eingangs genannten beiden US-A beschrieben ist. Der Schwingungserreger regt nur die Meßrohre 23, 24, dagegen nicht das Trägerelement 25 zu Resonanzschwingungen an und wird seinerseits von einer Treiberelektronik gespeist. Diese kann z.B. von der in der eigenen US-A 48 01 897 beschriebenen Art sein.

Die Schwingungserregung erfolgt dabei z.B. so, daß das Meßrohr 23 in der von den Achsen der Meßrohre 23, 24 gebildeten Ebene 26 schwingt. Die Schwingung des Meßrohrs 23 wird über das Einlaßverteilerstück 19 und das Auslaßverteilerstück 20 auf das andere Meßrohr 24 übergekoppelt, so daß beide Meßrohre 23, 24 im eingeschwungenen Zustand gegenphasige Biegeschwingungen ausführen. Es sind anstatt von Biegeschwingungen jedoch auch peristaltische Schwingungen, also solche mit periodischen Änderungen des Rohrquerschnitts, oder Torsionsschwingungen der Meßrohre möglich.

Rechts und links von der Halterung 27 für den Schwingungserreger, bevorzugt in jeweils demselben Abstand von der Halterung 27, sind Halterungen 28, 29 von jeweiligen Sensoren für die Schwingungen der Meßrohre 23, 24 angeordnet. Diese Sensoren können z.B. optoelektronische Sensoren sein, wie sie in der genannten US-A 48 01 897 beschrieben sind, oder es können elektromagnetische Sensoren vorgesehen werden, wie sie z.B. in der EP-A 83 144 erläutert sind.

Die Sensoren sind mit einer Auswerteelektronik verbunden, die aus der Phasendifferenz der Signale der Sensoren den Massendurchfluß und/oder aus der Schwingfrequenz die Dichte des Fluids bestimmt. Eine Auswerteelektronik für die erwähnten optoelektronischen Sensoren ist z.B. in der Zeitschrift "Automatisierungstechnische Praxis atp", 1988, Nr. 5, Seiten 224 bis 230 beschrieben.

Der Teil-Durchfluß durch das Trägerelement 25, falls es durchflossen ist, wird von der Auswerteelektronik z.B. während der Kalibrierung der einzelnen Massendurchflußmesser so berücksichtigt, daß der Gesamt-Durchfluß angezeigt wird, oder der Teil-Durchfluß wird auf andere Art und Weise so berücksichtigt, daß der Gesamt-Durchfluß angezeigt wird.

In Fig. 1 ist schließlich noch gezeigt, daß zweckmäßigerweise in der Nähe der Enden der Meßrohre 23, 24, also nicht weit von deren Fixierung im Einlaßverteilerstück 19 bzw. im Auslaßverteilerstück 20, jeweils eine Schwingungsknotenscheibe 30, 31 angebracht ist, die der Verbesserung der Schwingeigenschaften der Meßrohre 23, 24 dient, nämlich dadurch, daß der Schwingungsknoten vor das Einlaßverteilerstück 19 und vor das Auslaßverteilerstück 20 verlagert ist. Bei der erwähnten alleinigen Erregung des Meßrohrs 23 erfolgt die Schwingungsüberkopplung hier selbstverständlich durch die Schwingungsknotenscheiben 30, 31.

In Fig. 2 ist die Querschnittsansicht des Massendurchflußmessers von Fig. 1 entlang von deren Schnittlinie A-A gezeigt, und zwar im Maßstab 2:1 vergrößert. Aus Fig. 2 ergibt sich die oben erwähnte gegenseitige Lage der beiden Meßrohre 23, 24, und des Trägerelements 25. Es ist zu sehen, daß es in Umfangsrichtung keine konstante Wandstärke hat, sondern daß diese vom Umfangskreis 32 des Einlaßverteilerstücks 19 und von vom Symmetrie-Mittelpunkt ausgehenden Radien 33, 34 bestimmt ist, die von den Meßrohren 23, 24 einen etwas größeren Abstand als deren maximal auftretende Schwingungsweite haben.

Durch diese Ausbildung der Wand des Trägerelements 25 wird erreicht, daß dessen axiale Steifheit mindestens zweimal größer, vorzugsweise zehn- bis zwanzigmal, größer als die der Meßrohre 23, 24 gemacht werden kann. Ferner läßt sich z.B. durch diese Ausbildung der Wand des Trägerelements 25 die Bedingung realisieren, daß der thermische Übergangswiderstand des Trägerelements 25 zum Fluid wesentlich kleiner ist als der thermische Übergangswiderstand des Trägerrohrs 14 zum Fluid.

In Fig. 3 ist die Querschnittsansicht des Massendurchflußmessers von Fig. 1 entlang von deren Schnittlinie B-B wiederum im Maßstab 2:1 gezeigt. Daraus ergibt sich die Lage und Form der bereits oben erwähnten Schwingungsknotenscheibe 30. Es ist zu sehen, daß sie nur mit den beiden Meßrohren 23, 24 verbunden ist, jedoch vom Trägerelement 25 einen zur Nichtberührung ausreichenden Abstand einhält.

Als Material für die Meßrohre eignen sich besonders gut nichtrostende Stähle oder z.B. die unter der Marke Hastalloy bekannte Eisenlegierung. Aus Kostengründen wird in letzterem Falle zweckmäßigerweise ein mit den Meßrohren 23, 24 identisches Rohr aus (teurem) Hastalloy in eine durchgehende Bohrung des Trägerelements 25 aus üblichem, nichtrostendem (billigem) Stahl formschlüssig eingesetzt. Dies ist ohne weiteres möglich, da die thermischen Ausdehnungskoeffizienten dieser beiden Materialien annähernd gleich sind. Andererseits sind aber auch für die drei Rohre 23, 24, 25 die bei Massendurchflußmessern mit geraden Rohren bekannten anderen Metalle, wie z.B. Titan oder Zirconium, geeignet.

Dadurch, daß bei fluid-bedingten Temperaturwechseln, insb. Temperatursprüngen, die Temperatur des Trägerelements 25 im Vergleich zur Temperatur des Trägerrohrs 14 sehr schnell der Fluid-Temperatur folgt, wird erreicht, daß die Meßrohre 23, 24 und das Trägerelement 25 immer angenähert dieselbe Temperatur haben. Da dies auch zu gleichen thermischen Längenänderungen der drei Rohre 23, 24, 25 führt, unterliegen die Meßrohre 23, 24 praktisch keinen axialen Zug- oder Druckspannungen.

Allfällige plastische Verformungen der Verbindungsstücke 17, 18 haben wegen der großen Steifheit des Trägerelements 25 keinen Einfluß auf die Meßrohre und somit die Kalibrierung des Massendurchflußmessers.

## Patentansprüche

1. Massendurchflußmesser (10) nach dem Coriolis-Prinzip,
- der in den Verlauf einer von einem zu messenden Fluid durchströmten Rohrleitung eines gegebenen Durchmessers axial mit ihr fluchtend einsetzbar ist,
- mit einem Einlaßrohr (11) und einem Auslaßrohr (12),
-- die der Verbindung mit der Rohrleitung dienen,
- mit einem Einlaßverteilerstück (19) und einem Auslaßverteilerstück (20),
- mit einem äußeren nach Einsetzen mit der Rohrleitung koaxialen Trägerrohr (14),
-- dessen jeweiliges Ende am Einlaßrohr bzw. am Auslaßrohr fixiert ist,
- mit jeweils einem Verbindungsstück (17, 18),
-- über das das Einlaßrohr mit dem Einlaßverteilerstück bzw. das Auslaßrohr mit dem Auslaßverteilerstück verbunden ist,
- mit zwei parallelen, geraden, an jeweils beiden Enden im Einlaßverteilerstück bzw. im Auslaßverteilerstück fixierten Meßrohren (23, 24) gleicher lichter Weite und gleicher Wandstärke,
- mit einem geraden, internen Trägerelelement (25),
-- dessen Achse parallel zu der in der von den Achsen der Meßrohre gebildeten Ebene (26) verlaufenden Symmetrieachse der Meßrohre angeordnet ist,
-- dessen jeweiliges Ende im Einlaßverteilerstück bzw. im Auslaßverteilerstück fixiert ist und
-- dessen thermischer Übergangswiderstand zum Fluid wesentlich kleiner ist als der thermische Übergangswiderstand des Trägerrohrs zum Fluid,
- mit einem Schwingungserreger,
-- der die Meßrohre zu Resonanzschwingungen anregt,
- mit mindestens zwei entlang der Meßrohre versetzt angeordneten Sensoren für deren Schwingungen,
- mit einer Treiberelektronik für den Schwingungserreger und
- mit einer Auswerteelektronik,
-- die aus der Phasendifferenz der Signale der Sensoren den Massendurchfluß und/oder aus der Schwingfrequenz die Dichte des Fluids bestimmt.

2. Massendurchflußmesser nach Anspruch 1 mit einem Trägerelement (25), das eine mindestens zweimal, vorzugsweise zehn- bis zwanzigmal, größere axiale Steifheit als die Meßrohre aufweist.

3. Massendurchflußmesser nach Anspruch 1 mit einem eine gerade durchgehende Bohrung (25') aufweisenden Trägerelement (25), deren lichte Weite gleich der der Meßrohre (23, 24) ist und die vom Fluid durchströmt ist.

4. Massendurchflußmesser nach Anspruch 3, bei dem die Wandstärke des Trägerelements (25) entlang eines Umfangskreises nicht konstant ist.

5. Massendurchflußmesser nach Anspruch 4, bei dem die Wandstärke des Trägerelements (25) an seiner von den Meßrohren (23, 24) abgewandten Seite wesentlich größer als an seiner den Meßrohren (23, 24) zugewandten Seite ist.

6. Massendurchflußmesser nach einem der Ansprüche 2 bis 5, bei dem die Achse der Bohrung (25') von jeder Achse der Meßrohre (23, 24) den gleichen Abstand hat.

7. Massendurchflußmesser nach einem der Ansprüche 2 bis 5, bei dem der Abstand der Achsen der beiden Meßrohre (23, 24) voneinander gleich dem jeweiligem Abstand von der Achse der Bohrung (25') ist.

8. Massendurchflußmesser nach einem der Ansprüche 2 bis 5, bei dem ein mit den Meßrohren (23, 24) identisches Rohr in eine durchgehende Bohrung des Trägerelements (25) aus einem anderen Material als die Meßrohre formschlüssig eingesetzt ist, dessen thermischer Ausdehnungskoeffizienten annähernd gleich dem der Meßrohre ist.

9. Massendurchflußmesser nach Anspruch 1 mit einem Heatpipe als Trägerelement (25).

10. Massendurchflußmesser nach Anspruch 1 mit Meßrohren (23, 24), die vom Schwingungserreger zu gegenphasigen Biegeschwingungen in der von den Achsen der Meßrohre gebildeten Ebene (26) erregt sind.

## Claims

1. A mass flow meter (10) working on the Coriolis principle
- which is insertable into a conduit of a given diameter so as to be axially aligned with said conduit, through which flows a fluid to be measured,
- with an inlet tube (11) and an outlet tube (12),
-- which serve to connect the mass flow meter with the conduit,
- with an inlet manifold (19) and an outlet manifold (20),
- with an external support tube (14)
-- whose ends are fixed to the inlet tube and outlet tube, respectively,
- with two connecting pieces (17, 18)
-- via which the inlet and outlet tubes are connected with the inlet manifold and outlet manifold, respectively,
- with two parallel, straight measuring tubes (23, 24) of the same inner diameter and the same wall thickness each having its two ends fixed in the inlet manifold and outlet manifold, respectively,
- with a straight, internal supporting element (25)
-- whose axis is parallel to that axis of symmetry of the measuring tubes which lies in the plane (26) containing the axes of the measuring tubes,
-- whose ends are fixed in the inlet manifold and outlet manifold, respectively, and
-- whose thermal transition resistance to the fluid is substantially lower than the thermal transition resistance from the support tube to the fluid,
- with a vibration exciter
-- which excites the measuring tubes into sympathetic vibrations,
- with at least two sensors spaced along the measuring tubes for sensing their vibrations,
- with driver electronics for the vibration exciter, and
- with evaluation electronics
-- which determine the mass flow rate from the phase difference of the sensor signals and/or the density of the fluid from the vibration frequency.

2. A mass flow meter as claimed in claim 1 wherein the axial stiffness of the supporting element (25) is at least twice, preferably ten to twenty times, as high as that of the measuring tubes.

3. A mass flow meter as claimed in claim 1 wherein the supporting element (25) has a straight through hole (25') whose inner diameter is equal to that of the measuring tubes (23, 24) and through which the fluid flows.

4. A mass flow meter as claimed in claim 3 wherein the wall thickness of the supporting element (25) along a circumference is not constant.

5. A mass flow meter as claimed in claim 4 wherein the wall thickness of the supporting element (25) at its side remote from the measuring tubes (23, 24) is substantially greater than at its side adjacent to the measuring tubes (23, 24).

6. A mass flow meter as claimed in any one of claims 2 to 5 wherein the axis of the hole (25') is equidistant from the axis of each of the measuring tubes (23, 24).

7. A mass flow meter as claimed in any one of claims 2 to 5 wherein the distance between the axes of the two measuring tubes (23, 24) is equal to the distance from each of said axes to the axis of the hole (25').

8. A mass flow meter as claimed in any one of claims 2 to 5 wherein a tube identical with the measuring tubes (23, 24) is positively inserted in a through hole of the supporting element (25), whose material differs from that of the measuring tubes and has a coefficient of thermal expansion approximately equal to that of the measuring tubes.

9. A mass flow meter as claimed in claim 1 wherein the supporting element (25) is a heat pipe.

10. A mass flow meter as claimed in claim 1 wherein the measuring tubes (23, 24) are excited by the vibration exciter into antiphase flexural vibrations in the plane (26) containing the axes of the measuring tubes.

## Revendications

1. Débitmètre massique (10) travaillant sur le principe de Coriolis,
- qui peut être monté dans le tracé d'une conduite d'un diamètre donné, parcourue par un fluide à mesurer, dans l'alignement axial de cette conduite, et qui comprend
- un tube d'entrée (11) et un tube de sortie (12)
-- qui servent au raccordement à la conduite,
- un élément distributeur d'entrée (19) et un élément distributeur de sortie (20),
- un tube porteur (14) extérieur, qui est coaxial à la conduite après le montage,
-- dont les extrémités sont fixées respectivement au tube d'entrée et au tube de sortie,
- des éléments de raccordement (17, 18),
-- par l'intermédiaire desquels le tube d'entrée est relié à l'élément distributeur d'entrée et le tube de sortie à l'élément distributeur de sortie,
- deux tubes de mesure parallèles, rectilignes (23, 24), de même diamètre intérieur et de même épaisseur de paroi, fixés à l'élément distributeur d'entrée et à l'élément distributeur de sortie respectivement à leurs deux extrémités,
- un élément porteur intérieur rectiligne (25),
-- dont l'axe est disposé parallèlement à l'axe de symétrie des tubes de mesure qui s'étend dans le plan (26) formé par les axes des tubes de mesure,
-- dont les extrémités sont fixées respectivement dans l'élément distributeur d'entrée et dans l'élément distributeur de sortie, et
-- dont la résistance thermique de contact avec le fluide est sensiblement inférieure à la résistance thermique de contact du tube porteur avec le fluide,
- un excitateur de vibrations,
-- qui excite les tubes de mesure en vibrations de résonance,
- au moins deux capteurs disposés dans des positions décalées sur la longueur des tubes de mesure, pour capter leurs vibrations,
- un circuit électronique d'attaque pour l'excitateur de vibrations et
- un circuit électronique d'analyse
-- qui détermine le débit massique d'après la différence de phase des signaux des capteurs et/ou la densité du fluide d'après la fréquence des vibrations.

2. Débitmètre massique selon la revendication 1, comprenant un élément porteur (25) qui présente une rigidité axiale au moins deux fois, de préférence de dix à vingt fois, plus grande que celle des tubes de mesure.

3. Débitmètre massique selon la revendication 1, comprenant un élément porteur (25) qui présente un perçage rectiligne traversant (25') dont le diamètre intérieur est égal à celui des tubes de mesure (23, 24) et qui est parcouru par le fluide.

4. Débitmètre massique selon la revendication 3, dans lequel l'épaisseur de paroi de l'élément porteur (25) n'est pas constante le long d'une circonférence.

5. Débitmètre massique selon la revendication 4, dans lequel l'épaisseur de paroi de l'élément porteur (25) est sensiblement plus grande sur son côté le plus éloigné des tubes de mesure (23, 24) que sur son côté dirigé vers les tubes de mesure (23, 24).

6. Débitmètre massique selon une des revendications 2 à 5, dans lequel l'axe du perçage (25') se trouve à la même distance de chacun des axes des tubes de mesure (23, 24).

7. Débitmètre massique selon une des revendications 2 à 5, dans lequel la distance d'écartement mutuel des axes des deux tubes de mesure (23, 24) est égale à leur distance à l'axe du perçage (25').

8. Débitmètre massique selon une des revendications 2 à 5, dans lequel un tube identique aux tubes de mesure (23, 24) est emmanché, en établissant une liaison par sûreté de forme, dans un perçage traversant de l'élément porteur (25), lequel est fait d'une matière différente de celle des tubes de mesure et dont le coefficient de dilatation thermique est à peu près égal à celui des tubes de mesure.

9. Débitmètre massique selon la revendication 1, comprenant un tube de chaleur ("heat pipe") en tant qu'élément porteur (25).

10. Débitmètre massique selon la revendication 1, comprenant des tubes de mesure (23, 24) qui sont excités, par l'excitateur de vibrations, en vibrations de flexion en opposition de phase dans le plan (26) formé par les axes du tube de mesure.
